# EUROPEAN PATENT APPLICATION

(11) **EP 2 237 629 A1**
(43) Date of publication of application: **06.10.2010**
(21) Application number: 09004708.5
(22) Date of filing: 31.03.2009
(51) Int. Cl.: H04W 60/00, H04L 29/12, H04W 88/02

(54) **Multiple interface support in Proxy Mobile IPv6**

(71) Applicant: Nokia Siemens Networks GmbH & Co. KG, 81541 mÜNCHEN (DE)
(72) Inventor: Fan, Changpeng, 10557 Berlin (DE); Görg, Prof. Carmelita, 28357 Bremen (DE); Timm-Giel, Andreas, 28865 Lilienthal (DE); Toseef, Umar, 28201 Bremen (DE); Udugama, Asanga, 28357 Bremen (DE)

(57) **Abstract**

A Mobile Host (MH, 13) of a communication network (10) for transmitting a data packet is provided. The communication network (10) comprises the Mobile Host (MH, 13), a Local Mobility Anchor (LMA, 22) that is connected to at least one network connection of the Mobile Host (MH, 13), and a Correspondence Node (CN, 23) that is connected to the Local Mobility Anchor (LMA, 22). The Mobile Host (MH, 13) comprises an Internet Protocol address determining means for determining an Internet Protocol address of the at least one network connection of the Mobile Host (MH, 13) using a hardware address of the at least one network connection of the Mobile Host (MH, 13). The Mobile Host (MH, 13) also comprises an address providing means to provide a source address field of the data packet with the determined Internet Protocol address of the at least one network connection of the Mobile Host (MH, 13) and to provide the data packet with an Internet Protocol address of the Mobile Host (MH, 13) and a transmitting means for transmitting the data packet.

## Description

This application relates to network based dynamic flow management. In particular, this application relates to the net-work based dynamic flow management for a PMIP (Proxy Mobile Internet Protocol) based environment.

The PMIP protocol forms part of an IETF (Internet Engineering Task Force) specification for supporting network based mobility management. This protocol is described in S. Gundavelli et al, Proxy Mobile IPv6 (Internet Protocol, version 6.0) RFC (Request for Comments) 5213, IETF, Network-based Localized Mobility Management WG (Working Group).

This specification allows Mobile Hosts to change their network attachments from one network to another network, while maintaining their existing network connections.

According to the PMIP protocol, a Mobile Host is identified by a unique address prefix. The Mobile Host uses the unique address prefix to select a unique address. The Mobile Host uses this unique address wherever it connects to a communication network. To facilitate the network connection, the PMIP protocol provides certain entities that work together with the Mobile Host to route network traffic that is destined for the unique address of the Mobile Host. The network traffic is routed to the currently connected location of the Mobile Host.

The Mobile Host can move its network attachment to a first foreign network from a second foreign network. This movement requires the Mobile Host to authenticate itself with a first MAG (Mobile Access Gateway) of the first foreign network. Once the Mobile Host is authenticated with the first MAG, the first MAG sends a Proxy Binding Update (PBU) message to a LMA (Local Mobility Anchor). Afterward, the LMA replies with a Proxy Binding Acknowledgement (PBA) message to the first MAG. The LMA then creates a bi-directional tunnel to the first MAG from its side. The first MAG then creates the bi-directional tunnel to the LMA from its side. Later, the first MAG starts advertising or broadcasting Mobile Host home address prefix to the Mobile Host.

The tunnel refers to encapsulation of data packets, which encrypts the data packets for secure transmission. The encrypted data packets are intended for transmitting from one end of the tunnel to other end of the tunnel.

The LMA then captures or receives all data packets destined to the Mobile Host and it tunnels the received packets to the first MAG.

Similarly, the first MAG forwards data packets originated from the Mobile Host to the LMA through the tunnel. The data packets are then de-tunnelled or de-capsulated at each end of the tunnel and are then forwarded to its destination.

It is believed that a scheme for managing traffic flows, which are destined to or originating from a Mobile Host (MH) to utilize its multiple network connections improves efficiency of the MH.

The application provides methods of operating a MH (Mobile Host) for transmitting data packets.

The MH is known only by a single IP address. The MH is only enhanced slightly. This has the advantage that the MH is not burdened with much mobility related activities. It is believed a network is in a better position to support mobility related activities.

A communication network provides communication services for its users or subscribers.

The communication network comprises the MH. The MH relates to a mobile network node that uses PMIP (Proxy Mobile Internet Protocol) protocol, which operates in an IPv6 (Internet Protocol version 6.0) environment. The network node has a unique link address for each of its network attachments. The network node can comprise a computing device, or a computing related device, such as a printer.

The communication network also includes a CN (Correspondence Node). The CN sends data packets to the MH using the home address of the MH. The CN is intended for exchanging the data packets with the MH. The CN can be any computer wishing to communicate with the MH. The data packet relates to unit of data for communicating over a digital network.

Furthermore, the communication network comprises a LMA (Local Mobility Anchor). The LMA is intended to act as a home agent for the MH. The home agent has functionalities that are described in Mobile IPv6 base specification, RFC 3775.

The LMA serves as a topological anchor point for the home network prefix of the MH. The LMA also manages an address binding state of the MH and forwards the data packets related to the MH between the MH and the CN (Correspondence Node).

The LMA is also aware of a home prefix of the MH that the LMA is serving. The LMA is also aware of IP (Internet Protocol) address that the MH uses as its publically known address, such as its Home Address (HoA). The HoA is used by the CN to send data packets and it is formed using the home prefix of the MH.

In addition, the LMA can be connected to the MH via a MAG (Mobile Access Gateway). The MAG tracks attachment of the MH to a FN (Foreign Network). The FN refers to a network that is not a home network of the MH. The MAG also signals the attachment to the LMA, provides mobility related signalling for the MH, and forwards data packets to/from the MH between the MH and the LMA when the MH is attached to an access link of the FN.

Regarding to structural arrangement, the LMA is communicatively connected to one or more network connections of the MH via a MAG whilst the CN that is communicatively connected to the LMA. The communicative connection allows transmission of signals from one end of the connection to the other end of the connection.

The application provides a MH of a communication network for transmitting a data packet. The data packet is intended for transmitting from the MH to a CN. The MH has one or more network connections.

The MH has multiple network connections, wherein each network connection receives a different IP address for proper identification. This has the advantage of supporting multiple traffic flow. The multiple traffic flow can enhance traffic capacity as more that one network interface is provided. Furthermore, traffic reliability can be enhanced as a backup traffic flow can be provided.

The MH comprises an IP (Internet Protocol) address determining means for determining an IP address of one or more network connections of the MH using hardware address of one or more the network connection of the MH.

The determination means can use an address auto-configuration feature of IP to determine the IP address.

The MH also comprises an address providing means to provide a source address field of the data packet with the determined IP address of the one or more network connections of the MH and to provide the data packet with an IP address of the MH. Furthermore, the MH includes a transmitting means for transmitting the data packet.

The MH can comprises a source swap flag field providing means to set a source swap flag field of the data packet for indicating that a content of the source address field of the data packet is to be later swapped for the IP address of the MH.

The hardware address of the one or more network connections of the MH can comprise a link-layer address of the one or more network connections of the MH. In certain cases, the header of the data packet comprises the IP address of the MH.

The header of the data packet can comprise a RH2 (Route Header Type 2) header, wherein the RH2 header comprises the source swap flag field and the IP address of the MH.

In most cases, the MH authenticates its multiple network interfaces with the MAG. Then, the MAG can send a PBU (Proxy Binding Update) message that includes a MNII (Mobile Node Interface Identifier) option to the LMA. The LMA may later replies to the MAG with a PBA (Proxy Binding Acknowledgement) message. The PBA carries a HNP (Home Network Prefix) option that carries a HoA (Home Address) of the MH.

The MH determines an IP address of each network connection of the MH or at least one network connection of the MH. The determination uses a hardware address, such as a link layer address, of the network connection of the MH. The determination can use an address auto-configuration feature of IP (Internet Protocol).

After this, the MH can send a data packet that is destined to the CN. The data packet may be generated by an application that is hosted by the MH.

The application provides a LMA (Local Mobility Anchor) of a communication network for transmitting a data packet. The data packet is intended for transmitting from a MH (Mobile Host) to a CN (correspondent node). The LMA supports the functions of the MH.

The LMA comprises a receiving means for receiving a data packet from the one or more network connections of the MH via the MAG. The data packet is destined for the CN. The data packet comprises a source address field and an IP address of the MH. The source address field includes an IP address of the one or more network connections of the MH.

The LMA also comprises a swapping means for swapping a content of the source address field of the data packet for the IP address of the MH. In addition, the LMA includes a sending means for sending the data packet.

The swapping means can be triggered by a content of a source swap flag field of the data packet. A header of the data packet can comprise the IP address of the MH. The header of the data packet can comprise a RH2 (Route Header Type 2) header, wherein the RH2 header comprises the source swap flag field and the IP address of the MH.

In normal situations, the data packet is received by the LMA from the MH via the MGA. The MAG usually encapsulates the data packet before sending it to the MH. The encapsulation may encrypt the data packet. Upon receiving the data packet, the LMA removes the capsulation of the data packet.

Then, the LMA can forward the data packet to the CN, as directed or indicated by a content of a destination address field of the data packet. Since the data packet is destined to the CN, the content of the destination address field includes an IP address of the CN.

The application provides a LMA of a communication network. The LMA is intended for transmitting a data packet. The data packet is intended for transmitting from a CN to a MH. The LMA supports the transmission of data packet from the CN to the MH.

The LMA includes an IP address determining means for determining an IP address of the one or more network connections of the MH using a hardware address of the one or more network connections of the MH. The LMA also includes a receiving means for receiving the data packet from the CN.

Moreover, the LMA comprises an address providing means to provide a destination address field of the data packet with the determined IP address of the one or more network connections of the MH and to provide the data packet with an IP address of the MH.

The LMA also comprises a transmitting means for transmitting the data packet. A flow management process of the LMA selects the network connection of the MH for sending the data packet.

The LMA can comprise a destination swap flag field providing means to set a destination swap flag field of the data packet. A content of the destination swap flag field is intended for triggering the MH to swap content of the destination address field for the IP address of the MH.

The destination swap flag field can be used for indicating that a content of the destination address field of the data packet is to be later swapped for the IP address of the MH.

The hardware address of the one or more network connections of the MH can comprise a link-layer address of the one or more network connections of the MH. A header of the data packet can comprise the IP address of the MH. The header of the data packet can include a RH2 (Route Header Type 2) header. The RH2 header comprises the destination swap flag field and the IP address of the MH.

In most cases, the LMA determines an IP address of a network connection of the MH using a hardware address of the network connection of the MH.

Address auto-configuration procedures of IP (Internet Protocol) use network prefix and the hardware address of the network connection to configure unique addresses. The hardware address can include a link-layer address of the network connection of the MH.

The LMA can send a binding acknowledgement message, which carries a home prefix of the MH to the MAG.

The binding acknowledgement message can comprise a PBA (Proxy Binding Acknowledgement) message. The PBA acknowledgement message comprises a HNP (Home Network Prefix) option that includes a HoA (Home Address) of the MH.

A bi-directional tunnel can be established between the LMA and a MAG. The tunnel refers to encapsulation of data packets. The encapsulation may encrypt the data packets for secure transmission. The encrypted data packets are transmitted from one end of the tunnel to other end of the tunnel.

The LMA can select which network connection or the tunnel for sending the data packet to the MH, after the LMA receives the data packet from the CN. The data packet is destined to the HoA of the MH. The selection of the network connection is based on flow management rules of the LMA.

The application provides a MH of a communication network for receiving a data packet. The data packet is intended for transmitting from a CN to a MH. The MH supports transmission of data packets from the CN.

The MH comprises a receiving means for receiving a data packet from the LMA via the MAG. The data packet includes a destination address field that comprises an IP address of the one or more network connections of the MH and an IP address of the MH.

The MH also comprises a swapping means for swapping a content of the destination address field of the data packet for the IP address of the MH.

The swapping means can be triggered by a content of a destination swap flag field of the data packet. A header of the data packet can comprise the IP address of the MH. The header of the data packet can comprise a RH2 (Route Header Type 2) header, wherein the RH2 header comprises the destination swap flag field and the IP address of the MH.

The application provides a method of operating a MH of a communication network for transmitting a data packet. The data packet is intended for transmitting from a MH to a CN.

The method comprises the step of determining an IP address of one or more network connections of the MH using a hardware address of one or more network connections of the MH by the MH.

The method also comprises the step of providing a source address field of the data packet with the IP address of the one or more network connections of the MH. The step also provides the data packet with an IP address of the MH. The data packet is destined for the CN. A content of the source address field is intended to be later swapped for the IP address of the MH by the LMA.

In addition, the method comprises the step of transmitting the data packet to the LMA via a MAG by one or more network connections of the MH. A flow management process of the MH selects the network connection.

The application provides a method of operating a LMA of a communication network for transmitting a data packet. The data packet is intended for transmitting from a MH to a CN.

The method comprises the step of the LMA receiving the data packet via a MAG from one or more network connections of the MH. The data packet is destined for a CN. A source address of the data packet comprises an IP address of the one or more network connections of MH whilst the data packet comprises an IP address of the MH.

The LMA swaps a content of the source address field of the data packet for the IP address of the MH. Furthermore, the LMA transmits the data packet to the CN.

The MH provides the content of the source address field of the data packet and the IP address of the MH of the data packet.

The swapping can be triggered by a content of a source swap flag field of the data packet. The content of the source swap flag field is provided by the MH.

The LMA can send a PBA (Proxy Binding Acknowledgement) to the MH via a MAG. The PBA comprises a HNP (Home Network Prefix) option that comprises a HoA (Home Address). The transmitted HoA is intended to be later used by the MH to generate the IP address of one or more network connections of the MH.

The application provides a method of operating a LMA of a communication network for transmitting a data packet. The data packet is intended for transmitting from a CN to a MH.

The method comprises the step of the LMA determining an IP address of one or more network connections of the MH using a hardware address of the one or more network connections of the MH.

The LMA receives the data packet from the CN. The data packet is destined for the MH. The LMA also provides the data packet with IP address of the MH and provides a destination address field header of the data packet with the IP address of one or more network connections of the MH. A flow management process of the LMA selects the network connection of the MH.

The method also includes the step of sending the data packet to the one or more network connections of the MH via a MAG.

The LMA can receive a MNII (Mobile Node Interface Identifier) option from a MAG. The MNII comprises a link-layer address of the one or more network connections of the MH for determining the IP address of one or more network connections of the MH.

The application provides a method of operating a MH of a communication network for receiving a data packet. The data packet is intended for transmitting from CN to a MH.

The method comprises the step of receiving the data packet from a LMA by one or more network connections of the MH.

The data packet includes a destination address field that comprises an IP address of the network connection of the MH. The data packet comprises an IP address of the MH. A content of the destination address field of the data packet and the IP address of the MH of the data packet are provided by the LMA. Then, the MH swaps a content of the destination address field of the data packet for the IP address of the MH.

The swapping can be triggered by a content of a destination swap flag field of the data packet. The content of the destination swap flag field is provided by the LMA.

The application provides a communication network. The communication network includes one or more above-mentioned MH (Mobile Host) and/or one or more above-mentioned LMA (Local Mobility Anchor).

The application provides a computer program. The computer program executes or performs one of above-mentioned methods.

The application provides a data medium. The data medium holds the above-mentioned computer program.

The application provides a LMA computer system. The LMA computer system is intended for a communication network with a computer unit that controls a LMA, wherein the above-mentioned computer program is loaded.

In short, the application focuses on providing enhancement for the network based devices, such as the LMA and the MAG, whilst keeping enhancement of the Mobile Host to a minimum. This is done intently to avoid burdening the Mobile Host with mobility related activities.

The application provides an enhanced RH2 (Routing Header Type 2) header of Mobile IPv6 protocol for IP data packets. The Mobile IPv6 protocol is described in D. Johnson, C. Perkins, J. Arkko, Mobility Support in IPv6, RFC 3775, IETF.

Mobility management protocols provide continuity of communications with a Mobile Host when the Mobile Host moves and connects to a different network. A corresponding party or host of the Mobile Host continues to communicate with the Mobile Host, as it is unaware of the movement of the Mobile Host. With this protocol, the corresponding party communicates with the Mobile Host using one unique address of the Mobile Host. The unique address does not change when the Mobile Host moves to the different network. The PMIP protocol is one of the mobility management protocols that assign a unique prefix to the Mobile Host. The Mobile Host uses the unique prefix to build or determine the unique home address.
- Fig. 1: illustrates an embodiment of an enhanced traffic flow of a communication network within a PMIP envi- ronment,
- Fig. 2: illustrates an embodiment of an enhanced PMIP flow management for the communication network of Fig. 1,
- Fig. 3: illustrates an embodiment of an enhanced RH2 (Route Header Type 2) header for the enhanced PMIP flow management of Fig. 2,
- Fig. 4: illustrates an embodiment of a signalling sequence for establishing a network connection for the PMIP environment of Fig. 1,
- Fig. 5: illustrates an embodiment of a signalling sequence for processing and for forwarding data packets that are destined for a MH (Mobile Host) using the en- hanced RH2 header of Fig. 3,
- Fig. 6: illustrates an embodiment of signalling sequence for processing and for forwarding data packets that originates from the MH using the enhanced RH2 header of Fig. 3, and
- Fig. 7: illustrates a computer system of the communication network of Fig. 1.

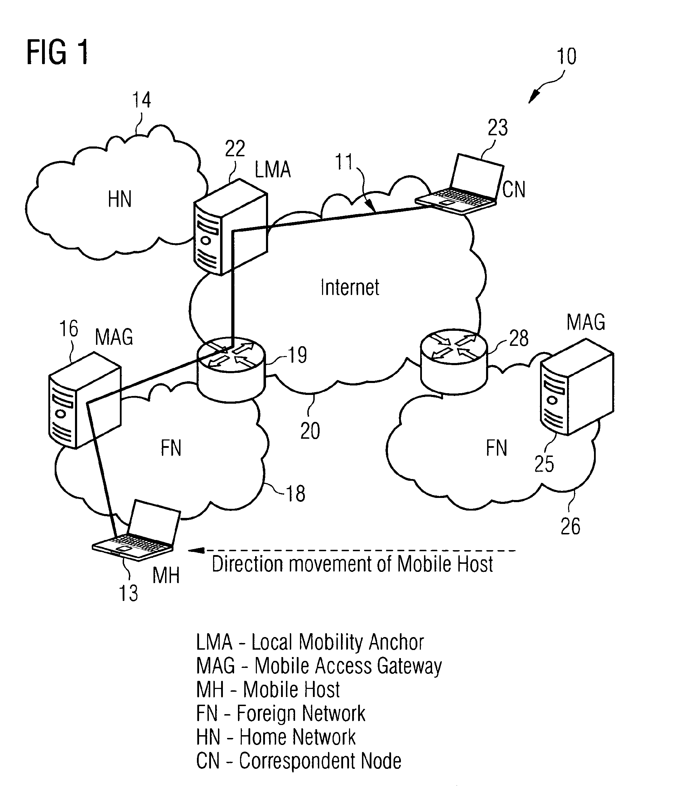

Figs. 1 to 6 have similar parts. The similar parts have similar names or same reference numbers. The description of the similar parts is thus incorporated by reference.

Fig. 1 depicts an embodiment of a communication network 10 within a PMIP environment 10. The communication network 10 has different PMIP entities within. A protocol of the PMIP environment is described in S. Gundavelli et al, Proxy Mobile IPv6 (Internet Protocol, version 6.0) RFC (Request for Comments) 5213, IETF, Network-based Localized Mobility Management WG (Working Group).

A traffic flow 11 is routed through the PMIP entities. The traffic flow 11 connects a MH (Mobile Host) 13 of a HN (Home Network) 14 to a first MAG (Mobile Access Gateway) 16 of a first FN (Foreign Network) 18 and to a first router 19. The traffic flow 11 also connects the first router 19 to a LMA (Local Mobility Anchor) 22 and to a CN (Correspondent Node) 23. The first router 19 connects the first FN 18 to the Internet 20.

The Internet 20 is also connected a second FN 26 by a second router 28. The second FN 26 has a second MAG 25.

The HN 14 refers a communication network, which has a network address prefix that matches a home address of the MH 13. IP routing mechanisms usually delivers data packets that are destined to the home address of the MH 13 to the HN 14.

The first FN 18 and the second FN 26 relates to communication networks that are different from the HN 14 of the MH 13.

The MH 13 refers to a mobile network node whose mobility is managed by the communication network 10. The network node has a unique network address and it can include a computing device, or a computing related device, such as a printer. The MH 13 operates in the IPv6 (Internet Protocol version 6.0) mode.

The first MAG 16 manages the mobility related signalling for the MH 13 when the MH 13 is attached to an access link of the first FN 18. The first MAG 16 tracks movement of the MH 13 to and from the access link and signals to LMA 22. The second MAG 25 and the first MAG 16 have similar functions.

The LMA 22 acts as a home agent for the MH 13 within the communication network 10. The home agent has functionalities that are described in Mobile IPv6 base specification, RFC 3775.

The LMA 22 is used as topological anchor point for the home network prefix of the MH 13. The LMA 22 also manages a binding state of the MH 13. The LMA 22 is aware of the home address prefix of the MH 13 that the LMA 22 is serving. The LMA 22 is also aware of IP address that the MH 13 uses. The IP address includes publically known address that comprises a Home Address (HoA) of the MH 13. This home address is formed using the home address prefix of the MH 13. The CN 23 sends the data packets to the MH 13 using this home address.

The CN 30 is intended for transmitting data packets to and from the MH 13.

The first router 19 and the second router 28 receive data packets and forward the data packets to its destination.

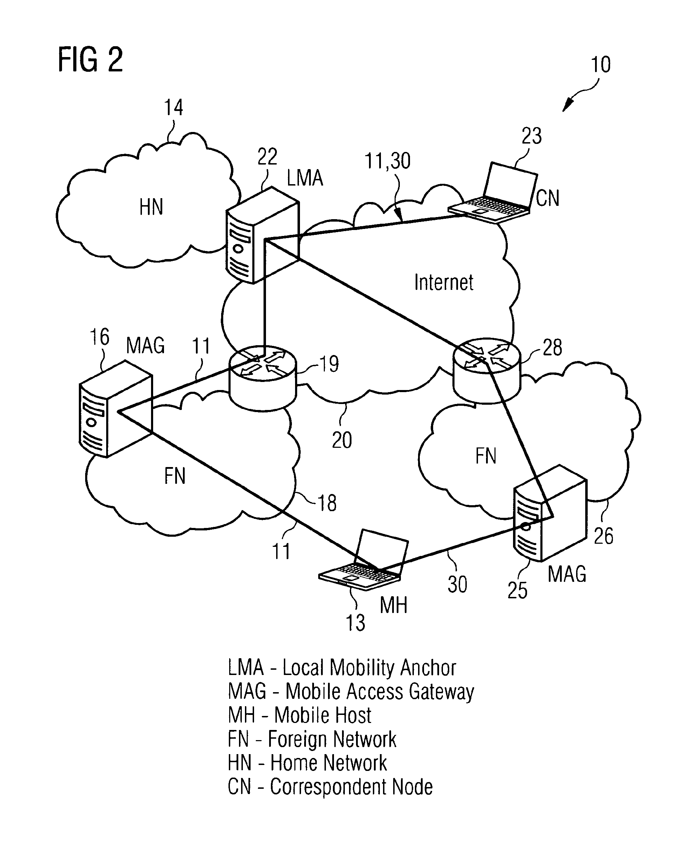

Fig. 2 depicts an embodiment of an enhanced PMIP flow management for the communication network 10 of Fig. 1. The flow management distributes or routes two network traffic flows 11 and 30 through two network connections of the MH 13, as shown in Fig. 2. The network traffic flows 11 and 30 connect the CN 23 to the MH 13.

The network traffic flow 11 supports an audio conversation between the CN 23 and the MH 13 whilst the network traffic flow supports a file transfer between the CN 23 and the MH 13.

The traffic flows 11 and 30 are routed from the CN 23 to the LMA 22. From the LMA 22, the traffic flow 30 is routed to the second router 28, to the second MAG 25, and to the MH 13 whilst the traffic flow 11 is routed to the first router 19, to the first MAG 16, and to the MH 13.

The CN 23 sends data packets of the traffic flows 11 and 30. The traffic flow 11 comprises data packets of the audio conversation whilst the traffic flow 30 includes data packets of the file transfer.

The LMA 22 captures or receives these data packets and forward the data packets audio conversation to the first connection of the MH 13 and the data packets of the file transfer to the second connection of the MH 13. The selection of the first and the second network connection is based on flow management rules.

Most modern mobile devices have multiple network interfaces supporting different bearer technologies. The bear technologies provide means to transport data signals or data packets.

As an illustration, the MH 13 can be in the form of an office worker laptop, which can support Ethernet, WLAN (Wireless Local Area Network), Bluetooth, and HSDPA (High-Speed Downlink Packet Access) connections or interfaces.

A user of the MH 13 can use these different interfaces in situations where one of these interfaces is more suitable or is preferred. In an office environment, the Ethernet interface can be preferred as this interface provides a higher signal bandwidth, assuming the main objective of the user is to maximize signal bandwidth. It is also possible that the MH 13 in this same environment uses two or more of these network interfaces simultaneously. This can result in aggregating available signal bandwidth and in improving user application experience.

To use these multiple interfaces, IETF (Internet Engineering Task Force) provides flow management mechanisms, such a flow mechanism that is described in Flow Bindings in Mobile IPv6 and NEMO Basic Support, Internet Draft (version 0), IETF, http://tools.ietf.org/id/draft-ietf-mext-flow-binding-00.txt.

Though these mechanisms do not relate directly to the PMIP protocol, they can still be used to distribute traffic flows to the multiple connections of the MH 13.

These IETF flow managements enable the LMA 22 to capture or receive the data packets destined to the MH 13.

Then, the LMA 22 may distribute or route the data packets. In this, some data packets can be distributed to one traffic flow for one connection of the MH 13 whilst the other data packets can be distributed to another traffic flow for another connection of the MH 13. The pre-condition of the flow management is that the MH 13 registers its multiple connections with the LMA 22.

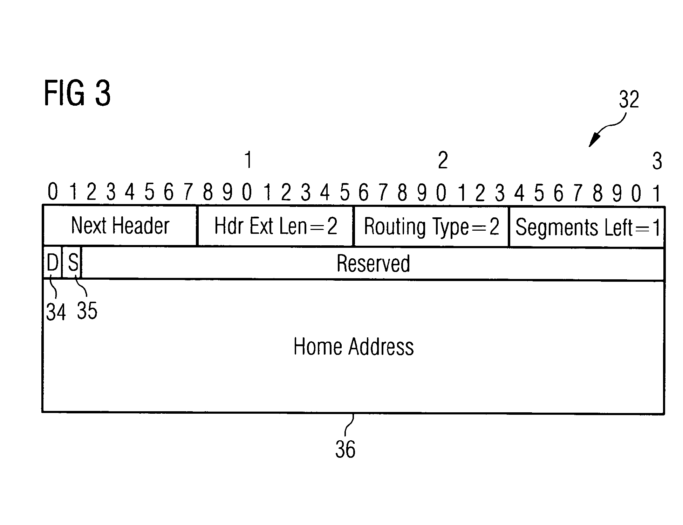

Fig. 3 shows an embodiment of an enhanced RH2 (Route Header Type 2) header 32 for the enhanced PMIP flow management of Fig. 2. The enhanced RH2 header has a "D flag" field 34, an "S flag field 35, and a "Home Address" field 36.

When the "D Flag" field 34 of an IP data packet is set, it indicates that a content of the "Home Address" field 36 is to be switched or is to be exchanged with a content of a destination address of the data packet. If the LMA 22 receives a data packet that is destined for the MH 13, the LMA 22 would insert the data packet with the enhanced RH2 header 32, which has the "D flag" field 34 that is set.

Similarly, when the "S Flag" field 35 of an IP data packet is set, it indicates that a content of the "Home Address" field 36 is to be switched or is to be exchanged with a content of a source address of the data packet. If the LMA 22 receives a data packet that is destined for the CN 23, the MH 13 would provide the data packet with the enhanced RH2 header, which has the S flag that is set.

This implementation can also be provided for multiple connections or network interfaces of the MH 13.

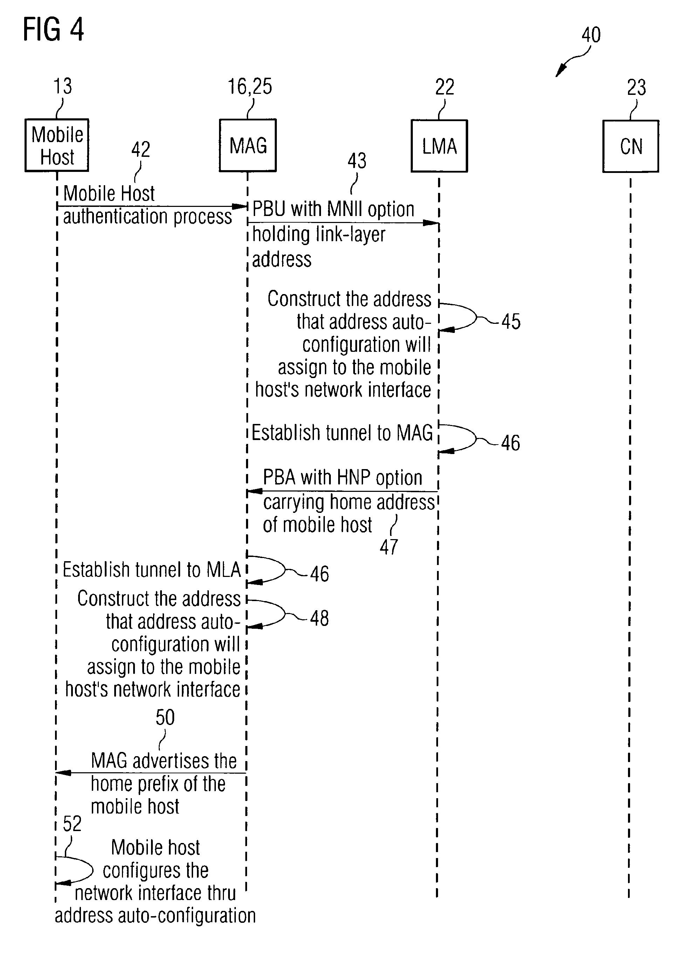

Figs. 4 to 6 show signalling sequences for supporting flow management for multiple interfaces between the LMA 22 and the MH 13 when the MH 13 is known by one IP address.

Fig. 4 depicts an embodiment of a signalling sequence 40 for establishing a network connection of the MH 13 with the FN 18 of the communication network 10 of Fig. 1.

Although, this signalling sequence 40 has actions for establishing one network connection, a signalling sequence for establishing multiple network interfaces has similar actions.

The signalling sequence 40 commences with the MH 13 connecting with the FN 18. The MH 13 then authenticates its multiple network interfaces or connections with the relevant MAGs 16 and 25, in a step 42.

The MAG 16 or 25 then sends a PBU (Proxy Binding Update) message to the LMA 22 that includes a MNII (Mobile Node Interface Identifier) option, in a step 43. This option includes a link-layer address of the network connection or of the network interface of the MH 13. The link-layer address is then registered with the LMA 22.

Using the MNII option, the LMA 22 later determines or constructs an IP address that is to be assigned to the network connection of the MH 13, in a step 45. Address auto-configuration procedures of the IP uses a home network prefix of the MH 13 and the link-layer address of the network interface to configure a unique address for the network interface of the MH 13. The unique address is called Home Care-of-Address (HCoA).

Since the LMA 22 is aware of the home address prefix of the MH 13 and the link-layer address of the MH network connection from the MNII option, it can construct the address assigned to the network connection of the MH 13.

The LMA 22 later replies to the relevant MAGs 16 or 25 with a PBA (Proxy Binding Acknowledgement) message, in a step 47. The PBA message carries Home Network Prefix (HNP) options that contain the HoA of the MH 13. The LMA 22 is aware of the HoA.

The LMA 22 and the relevant MAG 16 or 25 then establish a bi-directional tunnel between themselves, in a step 46. The tunnel is thus established between the LMA 22 and the relevant MAG 16 or 25.

Then, in a step 48 that is similar to the step 45, the relevant MAG 16 or 25 afterward constructs the addresses assigned to the network connection of the MH 13. This is possible as the MAG 16 and 25 knows the home network prefix of the MH 13 and the link-layer address of the MH network interface.

The relevant MAG 16 or 25 afterward starts advertising the home network prefix of the MH 13 to mobile hosts that are attached to the relevant MAG 16 or 25, in a step 50.

The MH 13 later gets or determines the address for the network connections through an address auto-configuration process, in a step 52. The address auto-configuration process follows the same procedure as that described in the step 45 to construct the HCoA. This address is different for each network connection and is different from the unique home address of the MH 13. Moreover, each MAG 16 or 25 can advertise the home network prefix to the MH 13 for incorporating into the HCoA address of the MH 13.

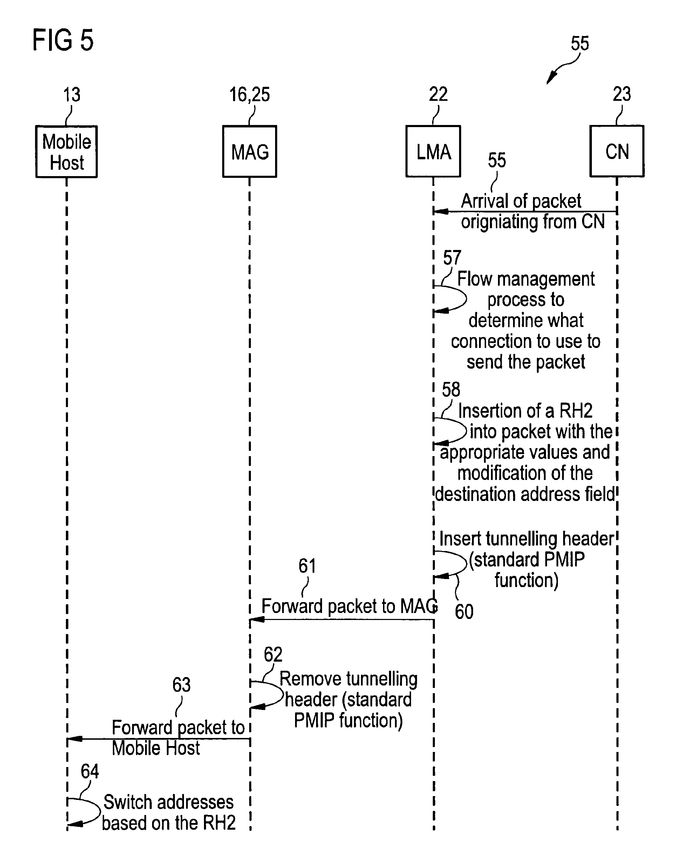

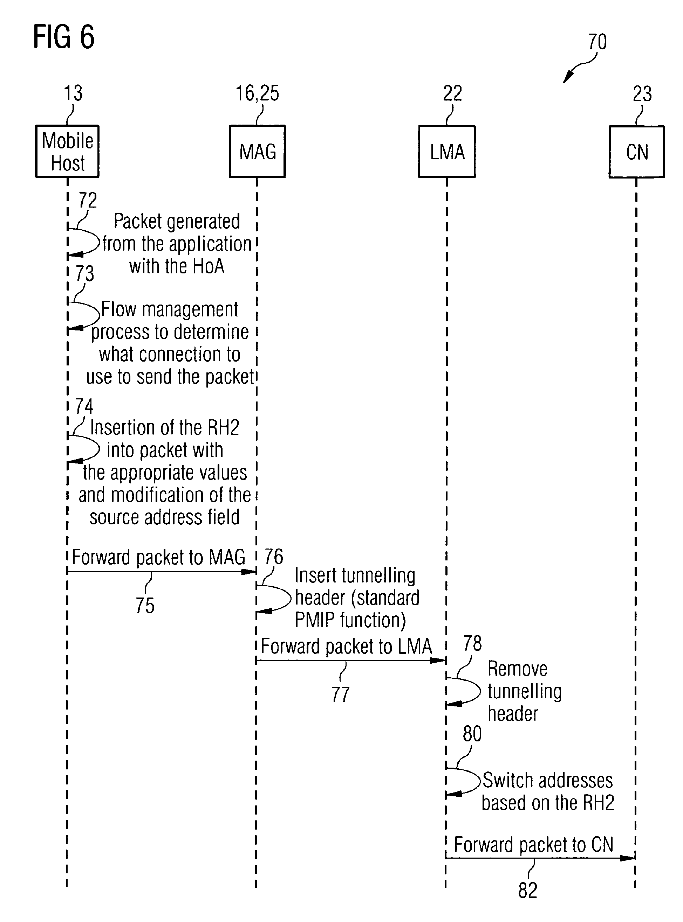

Fig. 5 and Fig. 6 show sequences of actions that the LMA 22, the MAG 16 or 25, and the MH 13 perform when the MH 13 communicates with the CN 23. As shown in Fig. 4, these figures show only the forwarding of data packets as related to one connection.

Fig. 5 depicts an embodiment of a signalling sequence 55 for processing and for forwarding data packets from the CN 23 to the MH 13 from the CN 23 using the enhanced RH2 header of Fig. 3.

The signalling sequence 55 shows the CN 23 sending the data packets to the LMA 22, in a step 55. The data packets are destined to the HoA of the MH 13.

Later, data packets arrive at the LMA 22. The LMA 22 then decides or selects the network connection of the MH 13 for sending the data packets, in a step 57. In this, the LMA 22 selects the tunnel that the data packets are to be sent for reaching the MH 13. This decision is based on established flow management rules of the LMA 22.

Before placing or sending the data packets to the selected tunnel, the LMA 22 inserts the enhanced RH2 header 32 into the data packet, in a step 58. The "D flag" field 34 of the enhanced RH2 header 32 is set to indicate that a switching is to be performed for the destination IP address field of the data packet. The content of the current destination IP address, which is the HoA, is then moved to the enhanced RH2 header 32. The Home-Care of Address (HCoA), as identified in the step 43, is inserted in the destination address field of the data packet.

The LMA 22 then inserts a tunnelling header onto the data packets, in a step 60. After this, the data packets are forwarded to the MAG 16 or 25, in a step 61.

When the data packets are received at the MAG 16 or 25, they are de-tunnelled, in a step 62 and they are later forwarded to the MH 13, in a step 63.

The MH 13, upon receiving the data packet and upon seeing or realising that the enhanced RH2 header 32 is present, performs the switching based on the information available in the enhanced RH2 header 32, in a step 64. The HoA information is then inserted into the destination address field of the data packets.

Fig. 6 shows an embodiment of a signalling sequence 70. The signalling sequence 70 is used for processing and for forwarding data packets that originates from the MH 13 to the CN 23 using the enhanced RH2 header of Fig. 3.

Applications running on the MH 13 can generate data packets using the HoA, in a step 72. The MH 13 then decides or selects which network connection of the MH 13 to use for sending the data packets, in a step 73. The selection is based on flow management rules.

Later, before leaving the MH 13, these data packets are inserted with the enhanced RH2 header 32. The enhanced RH2 header 32 contains the "S flag" field 35 that is set to indicate that a switching is to be done for the source IP address field of the data packets. The current source IP address, which is the HoA, is then moved to the enhanced RH2 header 32. The HCoA, which identified in the step 52 of Fig. 4 is later inserted into the source address of the data packet.

The data packets are then forwarded to the MAG 16 or 25 via the selected network connection of the MH 13, in a step 75. When the data packets arrive at the corresponding MAG 16 or 25, they are tunnelled to the LMA 22, in a step 76.

Afterward, the data packets are de-tunnelled by the LMA 22, in a step 78. The LMA 22, upon seeing or recognising the enhanced RH2 header of the data packets, then moves the HoA in the enhanced RH2 header to the source address of the IP packet, in a step 80. This data packet is then forwarded to the CN 23 using IP routing, in a step 82.

This embodiment uses a PMIP environment together with an appropriate flow management implementation. It can also operate in a MIPv4 based environment.

In addition, this embodiment enables the PMIP protocol to support simultaneously multiple connections or network interfaces and thus enhances traffic flow management. Even without the traffic flow management, this embodiment can be used to increase a reliability of network communication by supporting a backup path in an event of a primary path failure. It can also be used to support simultaneous multiple network connections even when two or more of the network connections are attached to the same MAG.

In a generic sense, a communication network can have one or more LMA 22.

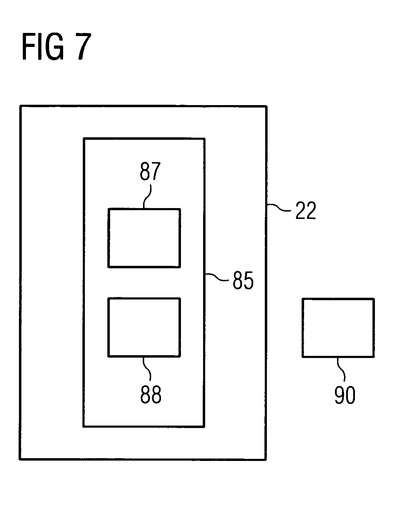

As shown in Fig. 7, the LMA 22 includes a computer system 85. The computer system 85 has a processor 87 and a memory 88. The memory 88 can store a computer program for supporting the signalling sequence 40, 55, and 70.

A data medium 90 can hold or store the computer program. The computer program can also be loaded in the memory 88 from the data medium 90.

The computer system is also called a computing device or computer unit. The memory refers random access memory or similar memory that provides the same function.

The program can include an operating system, such as a real time operating system or firmware for controlling devices of the LMA 22.

In a same manner, the MAG 16 or 25 can also include the computer system.

### List of abbreviations

- CN: Correspondent Node
- FM: Flow Management
- FN: Foreign Network
- FR: Foreign Router
- HCoA: Home Care-of-Address
- HN: Home Network
- HNP: Home Network Prefix
- HoA: Home Address
- HR: Home Router
- HSDPA: High Speed Downlink Packet Access
- ID: Identifier
- IETF: Internet Engineering Task Force
- LMA: Local Mobility Anchor
- MAG: Mobile Access Gateway
- MH: Mobile Host
- MIPv4: Mobile IPv4
- MIPv6: Mobile Internet Protocol version 6
- MN: Mobile Node
- MNII: Mobile Node Interface Identifier
- MNO: Mobile Network Operator
- NEMO: Network Mobility
- NetLMM: Network-based Localized Mobility Management
- PBA: Proxy Binding Acknowledgement
- PBU: Proxy Binding Update
- PMIPv6: Proxy Mobile IPv6
- RFC: Request for Comments
- RH2: Route Header Type 2
- UE: User Equipment
- WG: Working Group
- WLAN: Wireless Local Area Network

### Reference numbers

- 10: communication network
- 11: traffic flow
- 13: MH (Mobile Host)
- 14: HN (Home Network)
- 16: MAG (Mobile Access Gateway)
- 18: FN (Foreign Network)
- 19: router
- 20: Internet
- 22: LMA (Local Mobility Anchor)
- 23: CN (Correspondent Node)
- 25: MAG
- 26: FN
- 28: router
- 30: traffic flow'
- 32: RH2 (Route Header Type 2) header
- 34: "D flag" field
- 35: "S flag" field
- 36: "Home Address" field
- 40: signalling sequence
- 43: step
- 45: step
- 46: step
- 47: step
- 48: step
- 50: step
- 52: step
- 55: signalling sequence
- 55: step
- 57: step
- 58: step
- 60: step
- 61: step
- 62: step
- 63: step
- 64: step
70 signalling sequence
72 step
73 step
75 step
76 step
78 step
80 step
82 step
85 computer system
87 processor
88 memory
90 data medium

## Claims

1. A Mobile Host (MH, 13) of a communication network (10) for transmitting a data packet,
the communication network (10) comprising
- the Mobile Host (MH, 13),
- a Local Mobility Anchor (LMA, 22) that is connected to at least one network connection of the Mobile Host (MH, 13), and
- a Correspondence Node (CN, 23) that is connected to the
Local Mobility Anchor (LMA, 22),
the Mobile Host (MH, 13) comprises
an Internet Protocol address determining means for determining an Internet Protocol address of the at least one network connection of the Mobile Host (MH, 13) using a hardware address of the at least one network connection of the Mobile Host (MH, 13),
an address providing means to provide a source address field of the data packet with the determined Internet Protocol address of the at least one network connection of the Mobile Host (MH, 13) and to provide the data packet with an Internet Protocol address of the Mobile Host (MH, 13) and
a transmitting means for transmitting the data packet.

2. A Mobile Host (MH, 13) of claim 1
**characterised in that**
the Mobile Host (MH, 13) further comprises
a source swap flag field providing means to set a source swap flag field of the data packet for indicating that a content of the source address field of the data packet is to be swapped for the Internet Protocol address of the Mobile Host (MH, 13).

3. A Mobile Host (MH, 13) of claim 1 or 2
**characterised in that**
the hardware address of the at least one network connection of the Mobile Host (MH, 13) comprises a link-layer address of the at least one network connection of the Mobile Host (MH, 13).

4. A Local Mobility Anchor (LMA, 22) of a communication network (10) for transmitting a data packet,
the communication network (10) comprising
- a Mobile Host (MH, 13),
- the Local Mobility Anchor (LMA, 22) that is connected to at least one network connection of the Mobile Host (MH, 13), and
- a Correspondence Node (CN, 23) that is connected to the Local Mobility Anchor (LMA, 22),
the Local Mobility Anchor (LMA, 22) comprises a receiving means for receiving a data packet from the at least one network connection of the Mobile Host (MH, 13), the data packet is destined for the Correspondence Node (CN, 23), the data packet comprises a source address field that comprises an Internet Protocol address of the at least one network connection of the Mobile Host (MH, 13) and an Internet Protocol address of Mobile Host (MH, 13),
a swapping means for swapping a content of the source address field of the data packet for the Internet Protocol address of the Mobile Host (MH, 13), and
a sending means for sending the data packet.

5. A Local Mobility Anchor (LMA, 22) of claim 4 **characterised in that**
the swapping means is triggered by a content of a source swap flag field of the data packet.

6. A Local Mobility Anchor (LMA, 22) of a communication network (10) for transmitting a data packet,
the communication network (10) comprising
a Mobile Host (MH, 13),
the Local Mobility Anchor (LMA, 22) that is connected to at least one network connection of the Mobile Host (MH, 13), and a Correspondent Node (CN, 23) that is connected to the Local Mobility Anchor (LMA, 22),
the Local Mobility Anchor (LMA, 22) comprises an Internet Protocol address determining means for determining an Internet Protocol address of the at least one network connection of the Mobile Host (MH, 13) using a hardware address of the at least one network connection of the Mobile Host (MH, 13),
a receiving means for receiving the data packet,
an address providing means to provide a destination address field of the data packet with the determined Internet Protocol address of the at least one network connection of the Mobile Host (MH, 13) and to provide the data packet with an Internet Protocol address of the Mobile Host (MH, 13), and
a transmitting means for transmitting the data packet.

7. A Local Mobility Anchor (LMA, 22) of claim 6 **characterised in that**
the Local Mobility Anchor (LMA, 22) further comprises a destination swap flag field providing means to set a destination swap flag field of the data packet for indicating that a content of the destination address field of the data packet is to be swapped for the Internet Protocol address of the Mobile Host (MH, 13).

8. A Local Mobility Anchor (LMA, 22) of claim 6 or 7 **characterised in that**
the hardware address of the at least one network connection of the Mobile Host (MH, 13) comprises a link-layer address of the at least one network connection of the Mobile Host (MH, 13).

9. A Mobile Host (MH, 13) of a communication network (10) for receiving a data packet,
the communication network (10) comprising
the Mobile Host (MH, 13),
a Local Mobility Anchor (LMA, 22) that is connected to at least one network connection of the Mobile Host (MH, 13), and a Correspondent Node (CN, 23) that is connected to the Local Mobility Anchor (LMA, 22),
the Mobile Host (MH, 13) comprises
a receiving means for receiving a data packet from the Local Mobility Anchor (LMA, 22), the data packet comprises a destination address field that comprises an Internet Protocol address of the at least one network connection of the Mobile Host (MH, 13) and an Internet Protocol address of the Mobile Host (MH, 13),
a swapping means for swapping a content of the destination address field of the data packet for the Internet Protocol address of the Mobile Host (MH, 13).

10. A Mobile Host (MH, 13) claim 9
**characterised in that**
the swapping means is triggered by a content of a destination swap flag field of the data packet.

11. A method of operating a Mobile Host (MH, 13) for transmitting a data packet, the method that comprises determining an Internet Protocol address of at least one network connection of a Mobile Host (MH, 13) using a hardware address of the least one network connection of the Mobile Host (MH, 13),
providing a source address field of the data packet with the Internet Protocol address of the at least one network connection of the Mobile Host (MH, 13) and providing the data packet with an Internet Protocol address of the Mobile Host (MH, 13), the data packet being destined for the Correspondence Node (CN, 23) and
the at least one network connection of the Mobile Host (MH, 13) transmitting the data packet to the Local Mobility Anchor (LMA, 22).

12. A method of operating a Local Mobility Anchor (LMA, 22) for transmitting a data packet,
the method that comprises
the Local Mobility Anchor (LMA, 22) receiving the data packet from at least one network connection of a Mobile Host (MH, 13), the data packet is destined for a Corresponding Node
(CN, 23), a source address of the data packet comprises an Internet Protocol address of the at least one network connection of Mobile Host (MH, 13) and the data packet comprises an Internet Protocol address of the Mobile Host (MH, 13),
the Local Mobility Anchor (LMA, 22) swapping a content of the source address field of the data packet for the Internet Protocol address of the Mobile Host (MH, 13) and
the Local Mobility Anchor (LMA, 22) transmitting the data packet to the Correspondence Node (CN, 23).

13. A method according to claim 12
**characterised in that**
the swapping is triggered by a content of a source swap flag field of the data packet.

14. A method of operating a Local Mobility Anchor (LMA, 22) for transmitting a data packet,
the method that comprises
the Local Mobility Anchor (LMA, 22) determining an Internet Protocol address of at least one network connection of the Mobile Host (MH, 13) using a hardware address of the at least one network connection of the Mobile Host (MH, 13) and
the Local Mobility Anchor (LMA, 22) receiving the data packet from the Correspondence Node (CN, 23), the data packet is destined for the Mobile Host (MH, 13),
providing the data packet with an Internet Protocol address of the Mobile Host (MH, 13) and providing a destination address field header of the data packet with the Internet Protocol address of at least one network connection of the Mobile Host (MH, 13), and
sending the data packet to the at least one network connection of the Mobile Host (MH, 13).

15. A method of operating a Mobile Host (MH, 13) for receiving a data packet,
the method that comprises
at least one network connection of the Mobile Host (MH, 13) receiving the data packet from a Local Mobility Anchor (LMA, 22), a destination address field of the data packet comprises an Internet Protocol address of the at least one network connection of the Mobile Host (MH, 13), the data packet comprises an Internet Protocol address of the Mobile Host (MH, 13) and
the Mobile Host (MH, 13) swapping a content of the destination address field of the data packet for the Internet Protocol address of the Mobile Host (MH, 13).
